(19) Europäisches Patentamt / European Patent Office / Office européen des brevets

(11) **EP 4 708 395 A1**

(12) **EUROPEAN PATENT APPLICATION**
published in accordance with Art. 153(4) EPC

(43) Date of publication:
**11.03.2026 Bulletin 2026/11**

(21) Application number: **24880112.8**

(22) Date of filing: **16.10.2024**

(51) International Patent Classification (IPC):
$H01M\ 4/38^{(2006.01)}$  $C01B\ 33/021^{(2006.01)}$
$H01M\ 4/134^{(2010.01)}$  $H01M\ 4/62^{(2006.01)}$
$H01M\ 10/0525^{(2010.01)}$  $H01M\ 4/02^{(2006.01)}$

(52) Cooperative Patent Classification (CPC):
**C01B 33/021; H01M 4/02; H01M 4/134; H01M 4/38; H01M 4/62; H01M 10/0525;** Y02E 60/10

(86) International application number:
**PCT/KR2024/015688**

(87) International publication number:
**WO 2025/084775 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.10.2023 KR 20230140485**

(71) Applicant: **LG Energy Solution, Ltd.**
**Seoul 07335 (KR)**

(72) Inventors:
• HYUN, Jaeik
  Daejeon 34122 (KR)
• KIM, Donghyuk
  Daejeon 34122 (KR)
• LEE, Yong Ju
  Daejeon 34122 (KR)

(74) Representative: **Hoffmann Eitle**
**Patent- und Rechtsanwälte PartmbB**
**Arabellastraße 30**
**81925 München (DE)**

(54) **NEGATIVE ACTIVE MATERIAL, METHOD FOR MANUFACTURING SAME, NEGATIVE ELECTRODE COMPOSITION, NEGATIVE ELECTRODE COMPRISING SAME FOR LITHIUM SECONDARY BATTERY, AND LITHIUM SECONDARY BATTERY COMPRISING NEGATIVE ELECTRODE**

(57) The present application relates to a negative electrode active material, a method for manufacturing a negative electrode active material, a negative electrode composition, a negative electrode for a lithium secondary battery including the same, and a lithium secondary battery including a negative electrode.

[Figure 1]

실리콘 초정 (primary Si)
Eutectic Si
Eutectic Al
증상 간격 (interlamellar spacing)

EP 4 708 395 A1

**Description**

[Technical Field]

This application claims priority to and the benefit of Korean Patent Application No. 10-2023-0140485 filed in the Korean Intellectual Property Office on October 19, 2023, the entire contents of which are incorporated herein by reference.
The present application relates to a negative electrode active material, a method for manufacturing a negative electrode active material, a negative electrode composition, a negative electrode for a lithium secondary battery including the same, and a lithium secondary battery including a negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.
At present, a secondary battery is a representative example of an electrochemical device that uses such electrochemical energy, and the specified range of use thereof tends to be gradually expanding.
Along with the technology development and increased demand for mobile devices, the demand for secondary batteries as energy sources is increasing sharply. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.
In general, a secondary battery includes a positive electrode, a negative electrode, an electrolyte, and a separator. The negative electrode includes a negative electrode active material for intercalating and deintercalating lithium ions coming out from the positive electrode, and silicon-based particles having a high discharge capacity may be used as the negative electrode active material.
In particular, due to the demand for high-density energy batteries in recent years, research is being actively conducted on methods to increase a capacity by using together a silicon-based compound, such as Si/C and SiOx, having a capacity 10 times or more than that of a graphite-based material, as a negative electrode active material. However, compared with graphite, which is typically used, a silicon-based compound that is a high-capacity material has a large capacity but undergoes rapid volume expansion during charging, thereby disconnecting a conductive path to degrade battery characteristics.
Accordingly, in order to solve problems occurring when the silicon-based compound is used as the negative electrode active material, methods of suppressing the volume expansion itself, such as a method of adjusting a driving potential, a method of additionally further coating a thin film on an active material layer, and a method of adjusting a particle diameter of a silicon-based compound, or various methods for preventing a conductive path from being disconnected have been discussed. However, such methods may rather deteriorate the performance of a battery, and thus, the application thereof is limited, so that there is still a limitation in commercializing the manufacture of a battery including a negative electrode with a high content of a silicon-based compound.
Additionally, for Si negative electrode active materials, studies have found out that since the grain boundary acts as a diffusion path of lithium, a wider grain boundary, that is, a smaller grain size is more advantageous for the performance characteristics of secondary batteries.
However, in a case where a negative electrode active material is manufactured by casting and pulverizing Metallurgical Grade Si (MG-Si), since the general grain size of MG-Si ranges from hundreds of mm to several mm due to the high crystallinity of silicon, there is a limit to reducing the grain size of the Si active material. Thus, there is still a limit to improving performance characteristics of secondary batteries.
Therefore, it is necessary to develop a technology capable of forming a path that facilitates lithium-ion diffusion in an active material, so as to prevent damage to a conductive path caused by volume expansion of silicon-based active materials even when the silicon-based active materials are used as a negative electrode active material for improving capacity performance.

Prior Art Document

Japanese Patent Application Publication No. 2009-080971

[Detailed Description of the Invention]

[Technical Problem]

As a result of research aimed at forming a path that facilitates lithium-ion diffusion, it was found that there is a limit to reducing the crystal grain size. Accordingly, it was confirmed through research that, when a lamellar-form silicon active material is formed by alloying with a metal element that undergoes a eutectic reaction with silicon, a boundary between the two phases in the active material is formed, which acts as a diffusion path for lithium ions, thereby improving the cycle capacity retention rate.

Accordingly, the present application relates to a negative electrode active material, a method for manufacturing a negative electrode active material, a negative electrode composition, a negative electrode for a lithium secondary battery including the same, and a lithium secondary battery including a negative electrode capable of solving the above-described problems.

[Technical Solution]

An exemplary embodiment of the present specification provides a negative electrode active material including a lamellar structure silicon-based active material, in which the lamellar structure silicon-based active material is represented by Formula 1, and the lamellar structure silicon-based active material satisfies Formulas 2 and 3.

[Formula 1] $\qquad$ $Si_{100-x}M_x$

in Formula 1, x has a range of greater than 0 and less than 100 in atomic weight %,
M includes one or more selected from the group consisting of Al, Ni, Co, Ti, Mn, Cu, Cr, Fe, Zr, Ag, and Au, and

[Formula 2] $10\ nm \leq Y \leq 1\ \mu m$

[Formula 3] $10\ nm \leq X \leq 1\ \mu m$

in Formulas 2 and 3,
X refers to a size of primary silicon of the lamellar structure silicon-based active material, and
Y refers to an interlamellar spacing of the lamellar structure silicon-based active material.

An exemplary embodiment of the present specification provides the Formula 2 is $10\ nm \leq Y \leq 300\ nm$, and the Formula 3 is $10\ nm \leq X \leq 350\ nm$.

Another exemplary embodiment provides a method for manufacturing a negative electrode active material, the method including: pulverizing a silicon precursor to form a silicon-based active material; mixing a metal element including one or more selected from the group consisting of Al, Ni, Co, Ti, Mn, Cu, Cr, Fe, Zr, Ag, and Au into the silicon-based active material; melting the silicon-based active material and the metal element; and cooling the silicon-based active material and the metal element.

Still another exemplary embodiment provides a negative electrode composition including: the negative electrode active material according to the present application; a negative electrode conductive material; and a negative electrode binder.

Yet another exemplary embodiment provides a negative electrode for a lithium secondary battery including: a negative electrode current collector layer; and a negative electrode active material layer provided on one surface or both surfaces of the negative electrode current collector layer, wherein the negative electrode active material layer includes the negative electrode composition according to the present application or a cured product thereof.

Finally, there is provided a lithium secondary battery including a positive electrode; the negative electrode for a lithium secondary battery according to the present application; a separator provided between the positive electrode and the negative electrode; and an electrolyte.

[Advantageous Effects]

For a negative electrode active material according to an exemplary embodiment of the present invention, unlike the existing casting and pulverizing processing methods, a lamellar silicon-based active material layer (lamellar structure) is formed by alloying with a metal element that undergoes a eutectic reaction with a MG-Si pulverized material, and a size of primary Si of the lamellar structure silicon-based active material and an interlamellar spacing of the lamellar structure silicon-based active material are adjusted.

That is, a phase boundary is formed between two phases (primary Si and alloy) within a silicon-based active material by a lamellar silicon-based active material satisfying the ranges of Formulas 2 and 3 above, and the phase boundary acts as a diffusion path for lithium ions, like a grain boundary, thereby increasing the cycle capacity retention rate and initial capacity efficiency.

[Brief Description of Drawings]

FIG. 1 is an enlarged view of a lamellar silicon-based active material according to an exemplary embodiment of the present application.
FIG. 2 is a view showing a stack structure of a negative electrode for a lithium secondary battery according to an exemplary embodiment of the present application.
FIG. 3 is a view showing a stack structure of a lithium secondary battery according to an exemplary embodiment of the present application.

<Explanation of Reference Numerals and Symbols>

10: negative electrode current collector layer
20: negative electrode active material layer
30: separator
40: positive electrode active material layer
50: positive electrode current collector layer
100: negative electrode for lithium secondary battery
200: positive electrode for lithium secondary battery

[Best Mode]

Before describing the present invention, some terms are first defined.
When one part "includes", "comprises" or "has" one constituent element in the present specification, unless otherwise specifically described, this does not mean that another constituent element is excluded, but means that another constituent element may be further included.
In the present specification, 'p to q' means a range of 'p or more and q or less'.
In the present specification, the "specific surface area" is measured by the BET method, and specifically, is calculated from a nitrogen gas adsorption amount at a liquid nitrogen temperature (77K) by using BELSORP-mino II available from BEL Japan, Inc. That is, in the present application, the BET specific surface area may refer to the specific surface area measured by the above measurement method.
In the present specification, "Dn" refers to a particle size distribution, and refers to a particle diameter at the n% point in the cumulative distribution of the number of particles according to the particle diameter. That is, D50 is a particle diameter (average particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Note that the average particle diameter may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.
In an exemplary embodiment of the present application, the particle size or particle diameter may mean an average diameter or representative diameter of each crystal grain constituting the metal powder.
In the present specification, the description "a polymer includes a certain monomer as a monomer unit" means that the monomer participates in a polymerization reaction and is included as a repeating unit in the polymer. In the present specification, when a polymer includes a monomer, this is interpreted to be the same as when the polymer includes a monomer as a monomer unit.
In the present specification, it is understood that the term 'polymer' is used in a broad sense including a copolymer unless otherwise specified as 'a homopolymer'.
In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, the molecular weight refers to a weight average molecular weight unless particularly described otherwise.

Hereinafter, exemplary embodiments of the present invention will be described in detail with reference to the drawings so that one skilled in the art can readily implement the present invention. However, the present invention may be implemented in various different forms, and is not limited to the following descriptions.

An exemplary embodiment of the present specification provides a negative electrode active material including a lamellar structure silicon-based active material, in which the lamellar structure silicon-based active material is represented by Formula 1, and the lamellar structure silicon-based active material satisfies Formulas 2 and 3.

$$[\text{Formula 1}] \quad Si_{100-x}M_x$$

in Formula 1, x has a range of greater than 0 and less than 100 in atomic weight %,
M includes one or more selected from the group consisting of Al, Ni, Co, Ti, Mn, Cu, Cr, Fe, Zr, Ag, and Au,

$$[\text{Formula 2}] \quad 10 \text{ nm} \leq Y \leq 1 \text{ μm}$$

$$[\text{Formula 3}] \quad 10 \text{ nm} \leq X \leq 1 \text{ μm}$$

in Formulas 2 and 3,
X refers to a size of primary silicon of the lamellar structure silicon-based active material, and
Y refers to an interlamellar spacing of the lamellar structure silicon-based active material.

For the negative electrode active material according to an exemplary embodiment of the present invention, a phase boundary is formed between two phases (primary Si and alloy) within a silicon-based active material by a lamellar silicon-based active material satisfying the ranges of Formulas 2 and 3 above, and the phase boundary acts as a diffusion path for lithium ions, like a grain boundary, thereby increasing the cycle capacity retention rate and initial capacity efficiency.

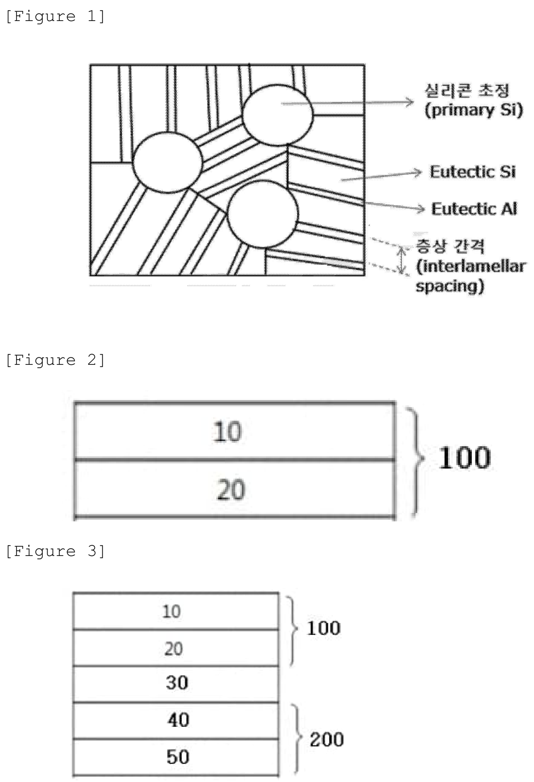

FIG. 1 is an enlarged view of a lamellar silicon-based active material according to an exemplary embodiment of the present application. Specifically, primary silicon can be confirmed, and a silicon-based active material having primary silicon and a lamellar structure can be confirmed. When a Si-rich melt solidifies, Si solidifies first into a spherical shape, which is primary silicon. When the remaining melt falls below a eutectic temperature, two phases, Si and M, separate and solidify into a lamellar structure. The silicon solidified during this process is eutectic Si, while the remaining M can be expressed as eutectic M. In FIG. 1, M may be Al.

In this case, eutectic Si and primary silicon have no difference in composition and can be distinguished by their morphology, with primary Si being spherical and eutectic Si being lamellar.

In an exemplary embodiment of the present application, the negative electrode active material includes a lamellar silicon-based active material. That is, the negative electrode active material manufactured according to a manufacturing method described below includes a lamellar silicon-based active material rather than a general silicon-based active material, and can satisfy the conditions of Formulas 2 and 3 described above.

In an exemplary embodiment of the present application, the lamellar structure silicon-based active material can be represented by Formula 1 below.

$$[\text{Formula 1}] \quad Si_{100-x}M_x$$

in Formula 1, x has a range of greater than 0 and less than 100 in atomic weight %,
M includes one or more selected from the group consisting of Al, Ni, Co, Ti, Mn, Cu, Cr, Fe, Zr, Ag, and Au.

In Formula 1 above, M refers to a metal element, and any metal element that undergoes a eutectic reaction with silicon can be used without limitation.

In the present application, the lamellar structure silicon-based active material is in the form of an alloy of silicon and a metal element, with a boundary formed between two phases.

In an exemplary embodiment of the present application, x can fall within a range of greater than 0 and less than 100, preferably 5 or greater and 95 or less, and more preferably 10 or greater and 80 or less, in atomic weight %.

The x falls with the specified range, and if x exceeds the specified range, the capacity of the silicon-based active material itself may decrease, leading to a problem. If x falls below the specified range, a content of the metal forming the alloy is too low to achieve the desired lamellar form, causing the ranges of Formulas 2 and 3 to be unmet and making it difficult to secure a lithium-ion path.

In an exemplary embodiment of the present application, the Formula 2 can satisfy 10 nm ≤ Y ≤ 1 μm, preferably 10 nm ≤ Y ≤ 800 nm, more preferably 10 nm ≤ Y ≤ 400 nm, and specifically 10 nm ≤ Y ≤ 200 nm.

In an exemplary embodiment of the present application, the Formula 3 can satisfy 10 nm ≤ X ≤ 1 μm, preferably 10 nm ≤ X ≤ 800 nm, more preferably 10 nm ≤ X ≤ 500 nm, and specifically 10 nm ≤ X ≤ 400 nm.

In the present application, there is provided the negative electrode active material in which a fraction of the primary silicon in the lamellar structure silicon-based active material is 0% or greater and less than 90%.

In another exemplary embodiment, the fraction of the primary silicon in the lamellar structure silicon-based active material may be 0% or greater and less than 90%, 2% or greater and 60% or less, or 5% or greater and 40% or less.

The fraction of the primary silicon in the lamellar structure silicon-based active material may refer to 0% or greater and less than 90% based on 100 parts by weight of the lamellar structure silicon-based active material.

The fraction of the primary silicon refers to silicon in the form of particles solidified earlier than the lamellar structure in the lamellar structure silicon-based active material. That is, in the manufacturing method described below, a solidification order is such that the primary silicon is solidified first, and then the lamellar structure is solidified.

The fraction of the primary silicon decreases as the composition of the alloy in terms of atomic weight % x approaches a eutectic point or the cooling rate increases. When the cooling rate increases, the solidification of primary silicon may not occur sufficiently, the eutectic reaction may occur with the temperature falling below a eutectic temperature. In addition, the composition of the alloy may approach the eutectic point, lowering the start temperature of solidification.

When the fraction of the primary silicon falls within the specified range, the fraction of the lamellar structure increases, thereby increasing the lithium diffusion path, resulting in improved battery performance. That is, when the ratio of the primary silicon decreases, the microstructure becomes finer, and the number of phase boundaries increases, resulting in an increase of diffusion paths for lithium ions, thereby facilitating diffusion.

The lamellar silicon-based active material according to the present application satisfies the size of the primary silicon and the interlamellar spacing as described above. For existing silicon-based active materials, attempts have been made to secure more grain boundaries by minimizing the size of crystal grains.

However, it was difficult to minimize the size of crystal grains, and even when the size of crystal grains was reduced, side reactions increased, resulting in further deterioration in the life characteristics. For the negative electrode active material according to the present application, instead of adjusting the crystal grain size of the silicon-based active material itself, a silicon-based active material in a lamellar form is formed by alloying with a metal, and is manufactured to satisfy the ranges of Formulas 2 and 3 during the manufacturing process.

By satisfying the ranges of Formulas 2 and 3 as described above, the capacity characteristics of the silicon-based active material can be maximized, and at the same time, a lamellar structure can be formed within the active material to secure a lithium diffusion path, thereby improving the initial capacity efficiency and cycle capacity retention rate.

In an exemplary embodiment of the present application, the silicon-based active material may include a metal impurity, and in this case, the impurity is metal that may be generally included in the silicon-based active material, and specifically, may be included in an amount of 0.1 part by weight or less based on 100 parts by weight of the silicon-based active material.

The capacity of the silicon-based active material is significantly higher than that of a graphite-based active material that is typically used, so that there have been more attempts to apply the same. However, the volume expansion rate of the silicon-based active material during charging and discharging is high, so that, for example, only a small amount thereof is mixed and used with a graphite-based active material.

Therefore, the present invention resolves the existing problems by adjusting the morphology of the silicon-based active material itself, rather than adjusting compositions of a conductive material and a binder in order to address the above-described problems, while using only a silicon-based active material as a negative electrode active material in order to improve capacity performance.

In the present application, there is provided the negative electrode active material in which an average particle diameter (D50) of the lamellar structure silicon-based active material is 1 μm or greater and 10 μm or less. In another exemplary embodiment, the average particle diameter (D50) of the lamellar structure silicon-based active material may be 1 μm or greater and 10 μm or less, 2 μm or greater and 9 μm or less, 3 μm or greater and 8 μm or less, and specifically, 4 μm or greater and 6 μm or less.

In an exemplary embodiment of the present application, there is provided a negative electrode composition including the negative electrode active material described above, a negative electrode conductive material, and a negative electrode binder.

In an exemplary embodiment of the present application, there is provided the negative electrode composition in which the negative electrode active material is included in an amount of 40 parts by weight or more based on 100 parts by weight of the negative electrode composition.

In another exemplary embodiment, the negative electrode active material may be included in an amount of 40 parts by weight or more, preferably 60 parts by weight or more, more preferably 65 parts by weight or more, and further preferably 70 parts by weight or more, and 95 parts by weight or less, preferably 90 parts by weight or less, and more preferably 85 parts by weight or less, based on 100 parts by weight of the negative electrode composition.

The negative electrode composition according to the present application uses the negative electrode active material satisfying the specific surface area size capable of controlling the volume expansion rate during charging and discharging even when the silicon-based active material having a significantly high capacity is used within the specified range. Accordingly, even when the silicon-based active material is within the specified range, the negative electrode composition does not degrade the performance of the negative electrode and has excellent output characteristics in charging and discharging.

In the related art, it is general to use only graphite-based compounds as the negative electrode active material. However, in recent years, as the demand for high-capacity batteries is increasing, attempts to mix and use silicon-based active materials are increasing in order to increase capacity. However, in the case of a silicon-based active material, even when the characteristics of the silicon-based active material itself are adjusted as described above, the volume may rapidly expand during charging and discharging, thereby causing some problems of damaging the conductive path formed in the negative electrode active material layer.

Therefore, in an exemplary embodiment of the present application, the negative electrode conductive material may include one or more selected from the group consisting of a point-like conductive material, a planar conductive material and a linear conductive material.

In an exemplary embodiment of the present application, the point-like conductive material refers to a point-like or spherical conductive material that may be used for improving conductivity of the negative electrode and has conductivity without causing a chemical change. Specifically, the point-like conductive material may be at least one selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 $m^2/g$ or greater and 70 $m^2/g$ or less, preferably 45 $m^2/g$ or greater and 65 $m^2/g$ or less, and more preferably 50 $m^2/g$ or greater and 60 $m^2/g$ or less.

In an exemplary embodiment of the present application, a content of the functional group (volatile matter) of the point-like conductive material may fall within a range of 0.01% or more and 1% or less, preferably 0.01% or more and 0.3% or less, and more preferably 0.01% or more and 0.1% or less.

In particular, when the content of the functional group of the point-like conductive material falls within the specified range, a functional group is present on a surface of the point-like conductive material, so that the point-like conductive material can be smoothly dispersed in a solvent when water is used as the solvent. In particular, in the present invention, as the specific silicon-based active material is used, a functional group content of the point-like conductive material can be lowered, which exhibits an excellent effect in improving dispersibility.

In an exemplary embodiment of the present application, the point-like conductive material having the content of the functional group within the range described above is included together with the silicon-based active material, and the content of the functional group can be adjusted according to a degree of heat treatment of the point-like conductive material.

In an exemplary embodiment of the present application, a particle diameter of the point-like conductive material may be 10 nm to 100 nm, preferably 20 nm to 90 nm, and more preferably 20 nm to 60 nm.

In an exemplary embodiment of the present application, the conductive material may include a planar conductive material.

The planar conductive material improves conductivity by increasing surface contact between silicon-based particles in the negative electrode, and at the same time, can serve to suppress disconnection of the conductive path due to the volume expansion. The planar conductive material may be expressed as a plate-like conductive material or a bulk-type conductive material.

In an exemplary embodiment of the present application, the planar conductive material may include at least one selected from the group consisting of plate-like graphite, graphene, graphene oxide, and graphite flake, and preferably may be plate-like graphite.

In an exemplary embodiment of the present application, an average particle diameter (D50) of the planar conductive material may be 2 to 7 $\mu$m, specifically 3 to 6 $\mu$m, and more specifically 3.5 to 5 $\mu$m. When the specified range is satisfied, the sufficient particle size results in easy dispersion without causing an excessive increase in viscosity of the negative electrode slurry. Therefore, the dispersion effect is excellent when performing dispersion using the same equipment and time.

In an exemplary embodiment of the present application, there is provided the negative electrode composition in which the planar conductive material has a D10 of 0.5 $\mu$m or greater and 2.0 $\mu$m or less, a D50 of 2.5 $\mu$m or greater and 3.5 $\mu$m or less, and a D90 of 6.5 $\mu$m or greater and 15.0 $\mu$m or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 0.25 $m^2$/g or greater.

In another exemplary embodiment, the planar conductive material may have a BET specific surface area of 1 $m^2$/g or greater and 500 $m^2$/g or less, preferably 5 $m^2$/g or greater and 300 $m^2$/g or less, and more preferably 5 $m^2$/g or greater and 250 $m^2$/g or less.

For the planar conductive material of the present application, a planar conductive material with a high specific surface area or a planar conductive material with a low specific surface area may be used.

In another exemplary embodiment, the planar conductive material is a planar conductive material with a high specific surface area, and the BET specific surface area may fall within a range of 50 $m^2$/g or greater and 500 $m^2$/g or less, preferably 80 $m^2$/g or greater and 300 $m^2$/g or less, and more preferably 100 $m^2$/g or greater and 300 $m^2$/g or less.

In another exemplary embodiment, the planar conductive material is a planar conductive material with a low specific surface area, and the BET specific surface area may fall within a range of 1 $m^2$/g or greater and 40 $m^2$/g or less, preferably 5 $m^2$/g or greater and 30 $m^2$/g or less, and more preferably 5 $m^2$/g or greater and 25 $m^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductive material or a semiconductive material may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present application, there is provided the negative electrode composition in which the negative electrode conductive material is included in an amount of 10 parts by weight or more and 40 parts by weight or less based on 100 parts by weight of the negative electrode composition.

In another exemplary embodiment, the negative electrode conductive material may be included in an amount of 0.1 part by weight or more and 40 parts by weight or less, preferably 0.2 part by weight or more and 30 parts by weight or less, more preferably 0.4 part by weight or more and 25 parts by weight or less, and most preferably 0.4 part by weight or more and 10 parts by weight or less based on 100 parts by weight of the negative electrode composition.

In an exemplary embodiment of the present application, there is provided the negative electrode composition in which the negative electrode conductive material includes a planar conductive material and a linear conductive material.

In an exemplary embodiment of the present application, there is provided the negative electrode composition in which the negative electrode conductive material includes 80 parts by weight or more and 99.9 parts by weight or less of the planar conductive material and 0.1 part by weight or more and 20 parts by weight or less of the linear conductive material based on 100 parts by weight of the negative electrode conductive material.

In another exemplary embodiment, the negative electrode conductive material may include 80 parts by weight or more and 99.9 parts by weight or less, preferably 85 parts by weight or more and 99.9 parts by weight or less, and more preferably 95 parts by weight or more and 98 parts by weight or less of the planar conductive material based on 100 parts by weight of the negative electrode conductive material.

In another exemplary embodiment, the negative electrode conductive material may include 0.1 part by weight or more and 20 parts by weight or less, preferably 0.1 part by weight or more and 15 parts by weight or less, and more preferably 0.2 parts by weight or more and 5 parts by weight or less of the linear conductive material based on 100 parts by weight of the negative electrode conductive material.

In an exemplary embodiment of the present application, the negative electrode conductive material includes both the planar conductive material and the linear conductive material, each satisfying the composition and ratio described above, so the service life characteristics of a conventional lithium secondary battery are not significantly affected, and particularly, the inclusion of both the planar conductive material and the linear conductive material increases the number of points where charging and discharging are possible, leading to excellent output characteristics at a high C-rate and a reduction in gas generation at high temperatures.

In an exemplary embodiment of the present application, the negative electrode conductive material may be composed of a linear conductive material.

In particular, when a linear conductive material is used alone, the electrode tortuosity, which is a problem of silicon-based negative electrodes, can be simplified, making it possible to improve the electrode structure, and accordingly, to reduce the migration resistance of lithium ions in the electrode.

In an exemplary embodiment of the present application, when the negative electrode conductive material includes a linear conductive material alone, the negative electrode conductive material may be included in an amount of 0.1 part by weight or more and 5 parts by weight or less, preferably 0.2 part by weight or more and 3 parts by weight or less, and more preferably 0.4 part by weight or more and 1 part by weight or less based on 100 parts by weight of the negative electrode composition.

The negative electrode conductive material according to the present application has a completely different configuration from that of a positive electrode conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the planar conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the planar conductive material that is used as the negative electrode conductive material is a material having a planar or plate-like shape, and may be expressed as plate-like graphite. That is, the planar conductive material is a material that is included in order to maintain a conductive path in the negative electrode active material layer, and refers to a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present application, the use of a carbon-based active material as an active material means that the carbon-based active material is processed into a point-like or spherical shape and used as a material for storing or releasing lithium.

That is, in an exemplary embodiment of the present application, artificial graphite or natural graphite, which is a carbon-based active material, has a point-like shape, and a BET specific surface area thereof may fall within a range of 0.1 $m^2$/g or greater and 4.5 $m^2$/g or less. In addition, plate-like graphite, which is a planar conductive material, has a planar shape, and a BET specific surface area thereof may be 5 $m^2$/g or greater.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

The negative electrode binder according to an exemplary embodiment of the present application serves to hold the active material and the conductive material in order to prevent distortion and structural deformation of the negative electrode structure during volume expansion and relaxation of the silicon-based active material. When such roles are satisfied, all of the general binders can be applied. Specifically, an aqueous binder may be used, and more specifically, a PAM-based binder may be used.

In an exemplary embodiment of the present application, the negative electrode binder may be included in an amount of 30 parts by weight or less, preferably 25 parts by weight or less, and more preferably 20 parts by weight or less, and 5 parts by weight or more, and 10 parts by weight or more based on 100 parts by weight of the negative electrode composition.

An exemplary embodiment provides a method for manufacturing a negative electrode active material, the method including the steps of: pulverizing a silicon precursor to form a silicon-based active material; mixing a metal element including one or more selected from the group consisting of Al, Ni, Co, Ti, Mn, Cu, Cr, Fe, Zr, Ag, and Au into the silicon-based active material; melting the silicon-based active material and the metal element; and cooling the silicon-based active material and the metal element.

As described above, rather than casting and pulverizing silicon itself, a metal element that forms an alloy with the silicon-based active material is mixed, melted, and rapidly cooled, resulting in formation of a lamellar silicon-based active material.

In the present application, a step of pulverizing the silicon-based active material and the metal element after the cooling step may be further included.

In the present application, there is provided the method for manufacturing a negative electrode active material in which after the step of cooling the silicon-based active material and the metal element, the silicon-based active material satisfies Formulas 2 and 3 below.

$$[Formula\ 2]\ 10\ nm \leq Y \leq 1\ \mu m$$

$$[Formula\ 3]\ 10\ nm \leq X \leq 1\ \mu m$$

in Formulas 2 and 3,

X refers to a size of primary silicon of the lamellar structure silicon-based active material, and
Y refers to an interlamellar spacing of the lamellar structure silicon-based active material.

In the present application, there is provided the method for manufacturing a negative electrode active material in which the cooling step includes melt spinning, suction casting, injection casting or gas atomization.

In general, melt spinning may refer to a process in which a molten material is ejected onto a rotating Cu wheel and rapidly cooled. In addition, suction casting may refer to a casting process in which a molten material is sucked into a mold under vacuum from below, and injection casting may refer to a casting process in which a molten material is introduced into a mold using high-pressure gas. Gas atomization is one of processes for manufacturing metal powder and may refer to one of the rapid cooling processes in which high-pressure gas is injected into molten metal to manufacture powder.

In the rapid cooling step described above, it is difficult to generally specify conditions because the gas atomization, melt spinning, suction casting, and injection casting is each different and diverse. However, the rapid cooling step enables the manufacture of a lamellar silicon-based active material.

In the present application, the cooling rate adjustment is different for each process, but in general, in melt spinning, the faster the wheel rotation speed, the faster the cooling speed, and in suction casting or injection casting, the thinner the mold thickness, the faster the cooling speed. Additionally, the cooling rate can be adjusted by external temperature adjustment, such as causing cooling water to flow into a mold or cooling the wheel or mold with liquid nitrogen.

In an exemplary embodiment of the present application, the pulverization process may include one or more processes selected from the group consisting of ball mill, pin mill, disk mill, and jet mill.

In an exemplary embodiment of the present application, there is provided a negative electrode for a lithium secondary battery including: a negative electrode current collector layer; and a negative electrode active material layer including the negative electrode composition according to the present application or a cured product thereof formed on one surface or both surfaces of the negative electrode current collector layer.

FIG. 2 is a view showing a stack structure of a negative electrode for a lithium secondary battery according to an exemplary embodiment of the present application. Specifically, a negative electrode 100 for a lithium secondary battery can be seen which includes a negative electrode active material layer 20 on one surface of a negative electrode current collector layer 10. FIG. 3 shows that the negative electrode active material layer is formed on one surface of the negative electrode current collector layer, but the negative electrode active material layer may be formed on both surfaces of the negative electrode current collector layer.

In an exemplary embodiment of the present application, the negative electrode for a lithium secondary battery may be formed by applying and drying a negative electrode slurry including the negative electrode composition to one surface or both surfaces of the negative electrode current collector layer.

In this case, the negative electrode slurry may include the negative electrode composition described above, and a slurry solvent.

In an exemplary embodiment of the present application, a solid content of the negative electrode slurry may fall within a range of 5% or more and 40% or less.

In another exemplary embodiment, the solid content of the negative electrode slurry may fall within a range of 5% or more and 40% or less, preferably 7% or more and 35% or less, and more preferably 10% or more and 30% or less.

The solid content of the negative electrode slurry may refer to a content of the negative electrode composition included in the negative electrode slurry, and may refer to a content of the negative electrode composition based on 100 parts by weight of the negative electrode slurry.

When the solid content of the negative electrode slurry falls within the specified range, the viscosity is appropriate during formation of the negative electrode active material layer, so that particle agglomeration of the negative electrode composition is minimized to efficiently form the negative electrode active material layer.

In an exemplary embodiment of the present application, the slurry solvent can be used without limitation as long as it can dissolve the negative electrode composition, and specifically, water or NMP may be used.

In an exemplary embodiment of the present application, the negative electrode current collector layer generally has a thickness of 1 μm to 100 μm. Such a negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

In an exemplary embodiment of the present application, there is provided the negative electrode for a lithium secondary battery in which a thickness of the negative electrode current collector layer is 1 μm or greater and 100 μm or less and a thickness of the negative electrode active material layer is 5 μm or greater and 500 μm or less.

However, the thickness may be variously modified depending on a type and a use of negative electrode used, and is not limited thereto.

In an exemplary embodiment of the present application, a porosity of the negative electrode active material layer may fall within a range of 10% or greater and 60% or less.

In another exemplary embodiment, the porosity of the negative electrode active material layer may fall within a range of 10% or greater and 60% or less, preferably 20% or greater and 50% or less, and more preferably 30% or greater and 45% or less.

The porosity varies depending on compositions and contents of the silicon-based active material, the conductive material, and the binder included in the negative electrode active material layer, and in particular, satisfies the range described above when the silicon-based active material and the conductive material are included in the specific compositions and contents according to the present application, so that the electrode has electric conductivity and resistance within appropriate ranges.

An exemplary embodiment of the present application provides a lithium secondary battery including a positive electrode; the negative electrode for a lithium secondary battery according to the present application; a separator provided between the positive electrode and the negative electrode; and an electrolyte.

FIG. 3 is a view showing a stack structure of a lithium secondary battery according to an exemplary embodiment of the present application. Specifically, a negative electrode 100 for a lithium secondary battery including a negative electrode active material layer 20 on one surface of a negative electrode current collector layer 10 can be seen, a positive electrode 200 for a lithium secondary battery including a positive electrode active material layer 40 on one surface of a positive electrode current collector layer 50 can be seen, and the negative electrode 100 for a lithium secondary battery and the positive electrode 200 for a lithium secondary battery are formed in a stacked structure with a separator 30 interposed therebetween.

The secondary battery according to an exemplary embodiment of the present specification may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 to 500 μm, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4(0 \leq c1 \leq 0.33)$, $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder, together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylenediene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a migration pathway for lithium ions, in which any separator may be used as the separator without particular limitation as long as it is typically used in a secondary battery, and particularly, a separator having high moisture-retention ability for an electrolyte as well as a low resistance to the migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a usual porous non-woven fabric, for example, a non-woven fabric made of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$,

$(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving service life characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of the claims included herein.

Mode for Invention

**<Preparation Examples>**

**<Example 1>**

An alloy having a composition of Si-30%Al (Formula 1) was rapidly cooled through melt spinning and then pulverized to prepare a negative electrode active material having a lamellar structure inside particles.

Specifically, a master alloy with a mass ratio of Si:Al of 7:3 was prepared using an induction furnace prior to melt spinning. In this case, the inside of the crucible was maintained in an argon atmosphere, and a current of 10 Ka was caused to flow through the copper coil to prepare a master alloy in a molten state of 2000°C, and the master alloy was naturally cooled. The prepared master alloy was melted in a carbon crucible and then injected onto a copper wheel with a diameter of 25 cm rotating at a speed of 3000 rpm at a pressure of 1.2 kPa to prepare a ribbon-shaped Si-30%Al alloy.

Thereafter, the prepared alloy was pulverized through ball milling in order to prepare a silicon-based active material. In a wet pulverization method using n-hexane as a medium, the balls made of zirconia ($ZrO_2$) were used, and ball milling was performed for 30 minutes at a mass ratio of alloy to ball of 1:40. In this case, the particle size (D50) of the active material prepared was 5 $\mu$m, the interlamellar spacing (Formula 2) was 50 nm, and the primary silicon size (Formula 3) was 100 nm.

**<Example 2>**

A negative electrode active material was prepared in the same manner as in Example 1, except that in Example 1, an alloy having a composition of Si-20%Al (Formula 1) was rapidly cooled through melt spinning and then pulverized to prepare the negative electrode active material having a lamellar structure inside particles.

**<Example 3>**

A negative electrode active material was prepared in the same manner as in Example 1, except that in Example 1, an alloy having a composition of Si-10%Al (Formula 1) was rapidly cooled through melt spinning and then pulverized to prepare the negative electrode active material having a lamellar structure inside particles.

**<Example 4>**

A negative electrode active material was prepared in the same manner as in Example 1, except that in Example 1, an alloy having a composition of Si-40%Al (Formula 1) was rapidly cooled through melt spinning and then pulverized to prepare the negative electrode active material having a lamellar structure inside particles.

**<Example 5>**

A negative electrode active material was prepared in the same manner as in Example 1, except that in Example 1, an alloy having a composition of Si-50%Al (Formula 1) was rapidly cooled through melt spinning and then pulverized to prepare the negative electrode active material having a lamellar structure inside particles.

**<Example 6>**

A negative electrode active material was prepared in the same manner as in Example 1, except that in Example 1, the prepared master alloy was melted in the carbon crucible and then injected onto the copper wheel with a diameter of 25 cm rotating at a speed of 2000 rpm at a pressure of 1.2 kPa to prepare a ribbon-shaped Si-30%Al alloy.

**<Example 7>**

A negative electrode active material was prepared in the same manner as in Example 1, except that in Example 1, the prepared master alloy was melted in the carbon crucible and then injected onto the copper wheel with a diameter of 25 cm rotating at a speed of 1000 rpm at a pressure of 1.2 kPa to prepare a ribbon-shaped Si-30%Al alloy.

**<Example 8>**

A negative electrode active material was prepared in the same manner as in Example 1, except that in Example 1, the prepared master alloy was melted in the carbon crucible and then injected onto the copper wheel with a diameter of 25 cm rotating at a speed of 4000 rpm at a pressure of 1.2 kPa to prepare a ribbon-shaped Si-30%Al alloy.

**<Comparative Example 1>**

MG-Si with a purity of 99.9% was prepared into ribbon-shaped silicon through melt spinning, which was then pulverized to prepare a polycrystalline negative electrode active material with 100% Si.
Specifically, a current of 10kA was caused to flow through a copper coil to prepare silicon in a molten state of 2000°C, and the molten silicon was injected onto the copper wheel with a diameter of 25 cm rotating at a speed of 3000 rpm at a pressure of 1.2 kPa to prepare ribbon-shaped silicon.
The prepared silicon was pulverized in the same manner as in Example 1, and in this case, the particle size (D50) of the active material was 5 $\mu$m.

**<Comparative Example 2>**

MG-Si with a purity of 99.9% was pulverized to prepare a single crystal negative electrode active material with 100% Si.
MG-Si was pulverized in the same manner as in Example 1, and in this case, the particle size (D50) of the active material was 5 $\mu$m.

**<Comparative Example 3>**

A negative electrode active material was prepared in the same manner as in Example 1, except that in Example 1, the particle size (D50) of the active material was adjusted to 5 $\mu$m, the interlamellar spacing (Formula 2) was adjusted to 500 nm, and the primary silicon size (Formula 3) was adjusted to 1.2 $\mu$m by adjusting the rapid cooling rate.

**<Comparative Example 4>**

A negative electrode active material was prepared in the same manner as in Example 1, except that in Example 1, the particle size (D50) of the active material was adjusted to 5 $\mu$m, the interlamellar spacing (Formula 2) was adjusted to 1.5 $\mu$m, and the primary silicon size (Formula 3) was adjusted to 800 nm by adjusting the rapid cooling rate.
The Examples and Comparative Examples are shown in Table 1 below.

[Table 1]

|  | Composition (Formula 1) | Particle size (D50) (μm) | Primary Si size (nm) | Interlamellar spacing (nm) |
|---|---|---|---|---|
| Example 1 | 70%Si-30%Al | 5 | 100 | 50 |
| Example 2 | 80%Si-20%Al | 5 | 220 | 52 |
| Example 3 | 90%Si-10%Al | 5 | 310 | 54 |
| Example 4 | 60%Si-40%Al | 5 | 80 | 48 |
| Example 5 | 50%Si-50%Al | 5 | 65 | 45 |
| Example 6 | 70%Si-30%Al | 5 | 250 | 65 |
| Example 7 | 70%Si-30%Al | 5 | 400 | 100 |
| Example 8 | 70%Si-30%Al | 5 | 40 | 20 |
| Comparative Example 1 | Si 100% | 5 | - | - |
| Comparative Example 2 | Si 100% | 5 | - | - |
| Comparative Example 3 | 70%Si-30%Al | 5 | 1200 | 500 |
| Comparative Example 4 | 70%Si-30%Al | 5 | 1500 | 800 |

**<Preparation of Negative Electrode>**

A negative electrode active material including the silicon-based active material, a first conductive material, a second conductive material, and polyacrylamide as a binder were added to distilled water serving as a solvent for formation of a negative electrode slurry in a weight ratio of 80:9.6:0.4:10 to prepare a negative electrode slurry (solid concentration: 25 wt%).

Specifically, the first conductive material was plate-like graphite (specific surface area: 17 $m^2$/g, average particle diameter (D50): 3.5 μm), and the second conductive material was SWCNT.

As a specific mixing method, the first and second conductive materials, the binder, and water were dispersed using a homo mixer at 2,500 rpm for 30 minutes, and then the silicon-based active material was added and dispersed at 2,500 rpm for 30 minutes to prepare a negative electrode slurry.

The negative electrode slurry was coated on both surfaces of a copper current collector (thickness: 8 μm) serving as a negative electrode current collector with a loading amount of 85 mg/25 $cm^2$, which was then roll-pressed and dried in a vacuum oven at 130°C for 10 hours to form a negative electrode active material layer (thickness: 33 μm), resulting in preparation of a negative electrode (thickness of negative electrode: 41 μm, porosity of negative electrode: 40.0%).

**<Preparation of Secondary Battery>**

A positive electrode slurry (solid concentration: 78 wt%) was prepared by adding $LiNi_{0.6}Co_{0.2}Mn_{0.2}O_2$ (average particle diameter (D50): 15 μm) as a positive electrode active material, carbon black (product name: Super C65, manufacturer: Timcal) as a conductive material, and polyvinylidene fluoride (PVdF) as a binder to N-methyl-2-pyrrolidone (NMP) as a solvent for formation of a positive electrode slurry at a weight ratio of 97:1.5:1.5.

The positive electrode slurry was coated on both surfaces of an aluminum current collector (thickness: 12 μm) serving as a positive electrode current collector with a loading amount of 537 mg/25 $cm^2$, which was then roll-pressed and dried in a vacuum oven at 130°C for 10 hours to form a positive electrode active material layer (thickness: 65 μm), resulting in preparation of a positive electrode (thickness of positive electrode: 77 μm, porosity: 26%).

A lithium secondary battery was manufactured by interposing a polyethylene separator between the positive electrode and the negative electrode of the Examples and the Comparative Examples and injecting an electrolyte.

The electrolyte was obtained by adding vinylene carbonate to an organic solvent, in which fluoroethylene carbonate (FEC) and diethyl carbonate (DMC) were mixed at a volume ratio of 10:90, in an amount of 3 wt% based on a total weight of the electrolyte and adding $LiPF_6$ as a lithium salt to a concentration of 1M.

**<Experimental Example>**

**Experimental Example 1: Results of Monocell Life Performance**

For the secondary batteries including the negative electrodes manufactured in the Examples and Comparative Examples, the life and capacity retention rate were evaluated using an electrochemical charging and discharging device. The in-situ cycle test was conducted on the secondary battery at 4.2-3.0 V 1 C/0.5 C, and during the test, 0.33 C/0.33 C charging/discharging (4.2-3.0 V) was performed every 50 cycles to measure the capacity retention rate.

life retention rate (%) = {(discharge capacity in the Nth cycle)/(discharge capacity in the first cycle)} $\times$ 100

[Table 2]

| | Life retention rate (%) after 200 cycles |
|---|---|
| Example 1 | 88 |
| Example 2 | 85 |
| Example 3 | 80 |
| Example 4 | 90 |
| Example 5 | 93 |
| Example 6 | 85 |
| Example 7 | 82 |
| Example 8 | 91 |
| Comparative Example 1 | 72 |
| Comparative Example 2 | 70 |
| Comparative Example 3 | 76 |
| Comparative Example 4 | 74 |

**Experimental Example 2: Change in Monocell Resistance**

In the test in Experimental Example 1, the capacity retention rates were measured by charging/discharging (4.2-3.0V) the batteries at 0.33C/0.33C every 50 cycles, and then the resistance increase rates were compared and analyzed by discharging the batteries with a pulse of 2.5C at SOC50 to measure the resistance.
For the evaluation of the resistance increase rate measurement, data at 200 cycles was calculated each, and the results are shown in Table 3 below.

[Table 3]

| | Resistance increase rate (%) after 200 cycles |
|---|---|
| Example 1 | 24 |
| Example 2 | 25 |
| Example 3 | 27 |
| Example 4 | 23 |
| Example 5 | 22 |
| Example 6 | 26 |
| Example 7 | 29 |
| Example 8 | 20 |
| Comparative Example 1 | 42 |
| Comparative Example 2 | 45 |
| Comparative Example 3 | 40 |

(continued)

|  | Resistance increase rate (%) after 200 cycles |
|---|---|
| Comparative Example 4 | 37 |

## Experimental Example 3: Coin Cell Capacity and Efficiency evaluation

For coin half-cells including the negative electrodes prepared in the Examples and Comparative Examples, the initial capacity and efficiency were evaluated using an electrochemical charger/discharger. The coin half-cells were subjected to charge/discharge tests at 0.005-1.5 V and 0.1 C, and the capacity and efficiency in the first cycle were measured, respectively.

Initial Efficiency (%): {(discharge capacity in first cycle)/(charge capacity in first cycle)} $\times$ 100

[Table 4]

|  | Capacity (mAh/g) | Efficiency (%) |
|---|---|---|
| Example 1 | 2750 | 93.2 |
| Example 2 | 3010 | 92.6 |
| Example 3 | 3247 | 92.3 |
| Example 4 | 2505 | 93.6 |
| Example 5 | 2250 | 94.0 |
| Example 6 | 2748 | 93.0 |
| Example 7 | 2745 | 92.8 |
| Example 8 | 2755 | 94.2 |
| Comparative Example 1 | 3512 | 92.0 |
| Comparative Example 2 | 3495 | 91.6 |
| Comparative Example 3 | 3510 | 92.4 |
| Comparative Example 4 | 3500 | 92.2 |

As can be confirmed in Experimental Examples 1 to 3, it can be seen that, in Examples 1 to 8 of the present application, a phase boundary is formed between two phases (primary Si and alloy) within the silicon-based active material by the lamellar silicon-based active material satisfying the ranges of Formulas 2 and 3 above, and the phase boundary acts as a diffusion path for lithium ions, like a grain boundary, thereby increasing the cycle capacity retention rate and initial capacity efficiency. As can be confirmed in Experimental Examples 2 and 3, it can be seen that as the content of Si decreases, the interlamellar spacing is almost similar, but the primary silicon size decreases, resulting in improved life performance. However, Si exhibits a capacity of about 3500 mAh/g and Al exhibits a capacity of about 990 mAh/g, and the capacity of the coin cell of Experimental Example 3 is determined according to the ratio thereof. That is, as the content of Si increases, the capacity of the coin cell increases. Therefore, there is a trade-off relationship between life and capacity depending on the composition, and finding the optimal ratio can satisfy both capacity and life characteristics at the same time.

In addition, in Table 4, the efficiency of the coin cell did not change significantly with an increase in Si content but tended to be higher as the number of boundaries increased, that is, as the structure became finer.

Additionally, Examples 6 to 8 where the cooling rate was changed by changing the rpm demonstrated that an increase in the rpm had a positive effect on the life without a decrease in capacity, whereas an increase in the Al content led to a decrease in capacity. That is, the main point of the present invention is to optimize the capacity and lifespan by adjusting the alloy composition of the lamellar silicon-based active material and the rpm.

**Claims**

1. A negative electrode active material comprising a lamellar structure silicon-based active material, wherein

    the lamellar structure silicon-based active material is represented by Formula 1, and
    the lamellar structure silicon-based active material satisfies Formulas 2 and 3:

    [Formula 1]     $Si_{100-x}M_x$

    in Formula 1, x has a range of greater than 0 and less than 100 in atomic weight %,
    M includes one or more selected from the group consisting of Al, Ni, Co, Ti, Mn, Cu, Cr, Fe, Zr, Ag, and Au,

    $$[Formula\ 2]\ 10\ nm \leq Y \leq 1\ \mu m$$

    $$[Formula\ 3]\ 10\ nm \leq X \leq 1\ \mu m$$

    in Formulas 2 and 3,
    X refers to a size of primary silicon of the lamellar structure silicon-based active material, and
    Y refers to an interlamellar spacing of the lamellar structure silicon-based active material.

2. The negative electrode active material of claim 1, wherein an average particle diameter (D50) of the lamellar structure silicon-based active material is 1 $\mu$m or greater and 10 $\mu$m or less.

3. The negative electrode active material of claim 1, wherein a fraction of the primary silicon in the lamellar structure silicon-based active material is 0% or greater and less than 90%.

4. The negative electrode active material of claim 1, wherein

    the Formula 2 is 10 nm $\leq$ Y $\leq$ 300 nm, and
    the Formula 3 is 10 nm $\leq$ X $\leq$ 350 nm.

5. A method for manufacturing a negative electrode active material, the method comprising:

    pulverizing a silicon precursor to form a silicon-based active material;
    mixing a metal element comprising one or more selected from the group consisting of Al, Ni, Co, Ti, Mn, Cu, Cr, Fe, Zr, Ag, and Au into the silicon-based active material;
    melting the silicon-based active material and the metal element; and
    cooling the silicon-based active material and the metal element.

6. The method of claim 5, further comprising pulverizing the silicon-based active material and the metal element after the cooling.

7. The method of claim 5, wherein the cooling comprises melt spinning, suction casting, injection casting, or gas atomization.

8. The method of claim 5, wherein after the cooling the silicon-based active material and the metal element, the silicon-based active material satisfies Formulas 2 and 3 below:

    $$[Formula\ 2]\ 10\ nm \leq Y \leq 1\ \mu m$$

    $$[Formula\ 3]\ 10\ nm \leq X \leq 1\ \mu m$$

    in Formulas 2 and 3,

    X refers to a size of primary silicon of the lamellar structure silicon-based active material, and

Y refers to an interlamellar spacing of the lamellar structure silicon-based active material.

9. A negative electrode composition comprising:

the negative electrode active material of any one of claims 1 to 4;
a negative electrode conductive material; and
a negative electrode binder.

10. The negative electrode composition of claim 9, wherein the negative electrode active material is included in an amount of 40 parts by weight or more based on 100 parts by weight of the negative electrode composition.

11. The negative electrode composition of claim 9, wherein the negative electrode conductive material comprises a planar conductive material and a linear conductive material.

12. A negative electrode for a lithium secondary battery, comprising:

a negative electrode current collector layer; and
a negative electrode active material layer provided on one surface or both surfaces of the negative electrode current collector layer,
wherein the negative electrode active material layer comprises the negative electrode composition of claim 9 or a cured product thereof.

13. The negative electrode for a lithium secondary battery of claim 12, wherein a thickness of the negative electrode current collector layer is 1 $\mu$m or greater and 100 $\mu$m or less, and
wherein a thickness of the negative electrode active material layer is 5 $\mu$m or greater and 500 $\mu$m or less.

14. A lithium secondary battery comprising:

a positive electrode;
the negative electrode for a lithium secondary battery of claim 12;
a separator provided between the positive electrode and the negative electrode; and
an electrolyte.

[Figure 1]

실리콘 초정
(primary Si)

Eutectic Si

Eutectic Al

층상 간격
(interlamellar
spacing)

[Figure 2]

[Figure 3]

## INTERNATIONAL SEARCH REPORT

| International application No. |
|---|
| **PCT/KR2024/015688** |

**A.    CLASSIFICATION OF SUBJECT MATTER**

**H01M 4/38**(2006.01)i; **C01B 33/021**(2006.01)i; **H01M 4/134**(2010.01)i; **H01M 4/62**(2006.01)i; **H01M 10/0525**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/38(2006.01); C01B 33/02(2006.01); H01M 10/052(2010.01); H01M 4/134(2010.01); H01M 4/36(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium secondary battery), 음극(anode), 실리콘(silicon), 층상 (lamellar structure), 실리콘 초정(primary Si), 층상 간격(interlamellar spacing), 용융(melting), 냉각(cooling), 금속 (metal), 분쇄(pulverization), 금속급 실리콘(Metallurgical Grade Si, MG-Si), 공정 반응(eutectic reaction)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2008-0019801 A (LG CHEM, LTD. et al.) 05 March 2008 (2008-03-05) See claims 1, 4 and 11; paragraphs [0009], [0023], [0026], [0029], [0030], [0036], [0063], [0064], [0067], [0073] and [0079]; and figure 3. | 5-7 |
| Y | | 1-4,8-14 |
| Y | ABBOUD, J. et al. Developing of nano sized fibrous eutectic silicon in hypereutectic Al–Si alloy by laser remelting. Scientific Reports. 2020, vol. 10, thesis no.: 12090, pp. 1-18. See abstract; and pages 1, 2, 5 and 6. | 1-4,8-14 |
| A | JP 6896261 B2 (TOHOKU UNIVERSITY) 30 June 2021 (2021-06-30) See claims 1-18. | 1-14 |
| A | KR 10-2013-0105626 A (FURUKAWA ELECTRIC CO., LTD. et al.) 25 September 2013 (2013-09-25) See abstract; and claims 1-34. | 1-14 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 February 2025** | **12 February 2025** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/015688** |

### C. DOCUMENTS CONSIDERED TO BE RELEVANT

| Category* | Citation of document, with indication, where appropriate, of the relevant passages | Relevant to claim No. |
| --- | --- | --- |
| A | KR 10-2014-0071505 A (NEXEON LTD.) 11 June 2014 (2014-06-11)<br>See abstract; and claims 39-51. | 1-14 |

Form PCT/ISA/210 (second sheet) (July 2022)

## INTERNATIONAL SEARCH REPORT
### Information on patent family members

International application No.

**PCT/KR2024/015688**

| Patent document cited in search report | | | Publication date (day/month/year) | Patent family member(s) | | | Publication date (day/month/year) |
|---|---|---|---|---|---|---|---|
| KR | 10-2008-0019801 | A | 05 March 2008 | KR | 10-1375455 | B1 | 26 March 2014 |
| JP | 6896261 | B2 | 30 June 2021 | CN | 112004777 | A | 27 November 2020 |
| | | | | EP | 3950587 | A1 | 09 February 2022 |
| | | | | EP | 3950587 | A4 | 18 May 2022 |
| | | | | JP | 2021-194794 | A1 | 08 April 2021 |
| | | | | US | 2021-0371288 | A1 | 02 December 2021 |
| | | | | WO | 2020-194794 | A1 | 01 October 2020 |
| KR | 10-2013-0105626 | A | 25 September 2013 | CN | 103118976 | A | 22 May 2013 |
| | | | | CN | 103118976 | B | 06 July 2016 |
| | | | | JP | 2012-082125 | A | 26 April 2012 |
| | | | | JP | 2012-082126 | A | 26 April 2012 |
| | | | | JP | 5598861 | B2 | 01 October 2014 |
| | | | | JP | 5877025 | B2 | 02 March 2016 |
| | | | | KR | 10-1920942 | B1 | 21 November 2018 |
| | | | | TW | 201217267 | A | 01 May 2012 |
| | | | | TW | I503277 | B | 11 October 2015 |
| | | | | US | 2013-0196158 | A1 | 01 August 2013 |
| | | | | US | 8980428 | B2 | 17 March 2015 |
| | | | | WO | 2012-036265 | A1 | 22 March 2012 |
| KR | 10-2014-0071505 | A | 11 June 2014 | CA | 2810123 | A1 | 08 March 2012 |
| | | | | CA | 2810123 | C | 17 March 2015 |
| | | | | CN | 103313937 | A | 18 September 2013 |
| | | | | CN | 103313937 | B | 18 January 2019 |
| | | | | EP | 2611732 | A1 | 10 July 2013 |
| | | | | EP | 2611732 | B1 | 07 January 2015 |
| | | | | EP | 2889097 | A1 | 01 July 2015 |
| | | | | EP | 2889097 | B1 | 29 June 2016 |
| | | | | GB | 2483372 | A | 07 March 2012 |
| | | | | GB | 2483372 | B | 25 March 2015 |
| | | | | HK | 1182685 | A1 | 06 December 2013 |
| | | | | HK | 1210095 | A1 | 15 April 2016 |
| | | | | JP | 2013-538777 | A | 17 October 2013 |
| | | | | JP | 2014-123575 | A | 03 July 2014 |
| | | | | JP | 5480451 | B2 | 23 April 2014 |
| | | | | JP | 5940572 | B2 | 29 June 2016 |
| | | | | KR | 10-1586190 | B1 | 18 January 2016 |
| | | | | KR | 10-1831655 | B1 | 23 February 2018 |
| | | | | KR | 10-2013-0067298 | A | 21 June 2013 |
| | | | | RU | 2013109771 | A | 10 October 2014 |
| | | | | RU | 2595710 | C2 | 27 August 2016 |
| | | | | SG | 187988 | A1 | 30 April 2013 |
| | | | | TW | 201228080 | A | 01 July 2012 |
| | | | | TW | I530006 | B | 11 April 2016 |
| | | | | US | 2013-0216907 | A1 | 22 August 2013 |
| | | | | US | 9871248 | B2 | 16 January 2018 |
| | | | | WO | 2012-028857 | A1 | 08 March 2012 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230140485

- JP 2009080971 A